**Europäisches Patentamt**

**European Patent Office**

**Office européen des brevets**

(19)

(11) Numéro de publication : **0 006 370**
**B1**

(12) # FASCICULE DE BREVET EUROPÉEN

(45) Date de publication du fascicule du brevet :
19.05.82

(51) Int. Cl.³ : **C 08 F 2/50**

(21) Numéro de dépôt : **79400314.5**

(22) Date de dépôt : **18.05.79**

(54) Préparation de polymères hydrosolubles utilisables comme floculants.

(30) Priorité : 09.06.78 FR 7817858

(43) Date de publication de la demande :
09.01.80 (Bulletin 80/01)

(45) Mention de la délivrance du brevet :
19.05.82 Bulletin 82/20

(84) Etats contractants désignés :
**BE DE FR GB IT LU NL SE**

(56) Documents cités :
FR - A - 2 084 010
FR - A - 2 348 227

(73) Titulaire : **RHONE-POULENC INDUSTRIES**
**22 Avenue Montaigne**
**F-75008 Paris (FR)**

(72) Inventeur : **Boutin, Jean**
**7, rue Buzy**
**F-69780 Mions (FR)**
Inventeur : **Neel, Jean**
**62, rue Lieutenant Colonel Prévost**
**F-69006 Lyon (FR)**

(74) Mandataire : **Cazes, Jean-Marie et al**
**RHONE-POULENC RECHERCHES Service Brevets**
**Chimie et Polymères 25, quai Paul Doumer**
**F-92408 Courbevoie (FR)**

Imprimerie Jouve, 18, rue St-Denis, 75001 Paris, France

# 0 006 370

## Préparation de polymères hydrosolubles utilisables comme floculants

La présente invention concerne un procédé de préparation de polymères organiques hydrosolubles utilisables notamment comme floculants.

Il est connu du FR-A-2 348 227 et du FR-A-2 084 010 de préparer des polymères d'addition hydrosolubles par photopolymérisation de solutions aqueuses de monomères enduites en couches sur supports, la réaction étant conduite en présence d'un photoinitiateur.

Le FR-A-2 348 227 enseigne en outre le principe du dépôt en continu de la solution aqueuse et l'utilisation d'un agent de transfert de radicaux libres, qui peut être en particulier le glycérol ou l'isopropanol. D'autre part, le FR-A-2 084 010 mentionne l'application de ces polymères comme agents de floculation.

On requiert habituellement de ces polymères organiques floculants aussi bien que de leurs procédés de préparation une série de caractéristiques dont certaines sont souvent contradictoires : les floculants doivent être solubles dans l'eau, ils doivent avoir un poids moléculaire aussi élevé que possible (haute viscosité intrinsèque) ; lorsqu'ils se dissolvent dans l'eau, il faut, si possible, qu'ils ne laissent aucun résidu insolubles ; leur vitesse de dissolution dans l'eau doit être la plus grande possible ; il faut pouvoir les obtenir par polymérisation de solutions aqueuse aussi concentrées que possible en monomère pour que la productivité de l'installation soit bonne mais en même temps, il faut évacuer les calories dégagées lors de cette polymérisation afin de maintenir dans le milieu de photopolymérisation une température aussi basse que possible pour éviter la dégradation du poids moléculaire et éventuellement la formation de fractions insolubles dans l'eau ; il faut enfin que la polymérisation se poursuive jusqu'à un stade aussi avancé que possible afin que la teneur en monomère(s) résiduel(s) dans le floculant soit aussi basse que possible ; en outre si on doit avoir recours à des adjuvants de photopolymérisation, ceux-ci doivent être si possible non odorants et non toxiques. Enfin, il est souhaitable que le pH de la solution soumise à photopolymérisation ne soit pas trop élevé notamment lorsque le ou les monomères utilisés sont sensibles à la saponification.

Il est déjà difficile de réaliser et concilier tous ces objectifs lorsque les monomères sont purs, mais cela est encore plus difficile avec des monomères contenant des impuretés.

Il arrive ainsi que l'acrylamide contienne des impuretés, surtout s'il s'agit d'acrylamide provenant de l'hydrolyse de l'acrylonitrile et notamment de l'hydrolyse par l'acide sulfurique. Ces impuretés, de nature encore inconnue ont normalement un caractère acide ce qui permet d'évaluer le degré d'impureté du monomère en mesurant son indice d'acide. Il ne suffit cependant pas de neutraliser le monomère, et par là de neutraliser les impuretés pour éliminer l'effet nocif de celles-ci, en sorte que la mesure de l'indice d'acide n'a pas une valeur indicative absolue de la pureté de l'acrylamide.

L'indice d'acide se mesure par neutralisation à la soude N/10 (virage repéré à l'aide de rouge de phénol) d'une solution contenant $90 \text{ cm}^3$ d'eau pure et 10 g d'acrylamide et on exprime cet indice en milligrammes de KOH qui serait nécessaire pour neutraliser 1 g d'acrylamide.

L'accroissement de l'indice d'acide de l'acrylamide (acrylamide provenant de l'hydrolyse sulfurique de l'acrylonitrile et n'ayant pas subi de neutralisation particulière) s'accompagne d'effets nocifs qui sont de plus en plus accentués. Ces effets nocifs ont tendance à se manifester d'abord par un allongement du temps de dissolution dans l'eau mais peuvent aller jusqu'à la formation de gels insolubles. Avec des indices d'acide de 0,4 on observe déjà des effets nocifs appréciables ; la durée de dissolution du floculant dans l'eau peut être multipliée par 5 ou même 10 simplement par augmentation de l'indice d'acide de quelques dixièmes d'unités.

Ces effets nocifs se constatent non seulement pour les impuretés sus-mentionnées de l'acrylamide mais aussi pour toute sorte d'autres impuretés des autres monomères. Ainsi l'acide acrylique contient souvent de l'acroléïne qui a des effets nocifs à des doses très faibles : l'influence en est sensible déjà à 5 ppm (parties par millions) d'acroléïne dans l'acide acrylique. Pour des monomères de type ammonium quaternaire, il y a aussi d'autres impuretés néfastes ; c'est ainsi qu'on a été amené à proposer des procédés de purification de ces monomères (brevet anglais 1 459 811).

Un objet de l'invention est donc de fournir un procédé amélioré de préparation de polymères organiques utilisables comme floculants.

Un autre objet de l'invention est de perfectionner les procédés connus de photopolymérisation.

Un autre objet de l'invention est de fournir un procédé de photopolymérisation de monomères acryliques conduisant à des floculants de bonne qualité même dans le cas où les monomères de départ ne sont pas très purs.

Un autre objet de l'invention est de fournir un procédé de photopolymérisation de monomères acryliques ne nécessitant pas l'utilisation de pH très élevé dans la solution aqueuse de ces monomères soumise à photopolymérisation.

Un objet plus particulier de l'invention est de fournir un procédé de photopolymérisation conduisant à des floculants solubles dans l'eau assez rapidement et ne contenant pas de fraction insoluble dans l'eau.

Un autre objet de l'invention est de fournir des adjuvants de polymérisation qui facilitent la solubilisation des floculants sans diminuer substantiellement le poids moléculaire de ces floculants et ce, même lorsqu'on utilise des quantités variables et/ou importantes d'adjuvants et des monomères de qualité très variables.

Il a maintenant été trouvé qu'on pouvait atteindre ces buts grâce au nouveau procédé faisant l'objet de l'invention.

Ce procédé est un procédé de préparation de polymères hydrosolubles par irradiation à l'aide de rayonnements de longueur d'onde comprise entre 150 et 500 mµ (de préférence comprise entre 300 et 450 mµ) d'une couche mince déposée en continu sur un support mobile, d'une solution aqueuse de monomères oléfiniquement insaturés contenant un promoteur de photopolymérisation, caractérisé en ce que la solution aqueuse de monomères contient aussi un composé polyhydroxylé comprenant au moins deux fonctions alcool secondaire et possédant en plus 1 ou 2 groupes carboxyliques (sous forme acide ou sous forme sel).

Comme composé polyhydroxylé de ce type on peut utiliser un dérivé des oses, ayant de préférence de 5 à 6 atomes de carbone ; lorsqu'il s'agit de sels, on préfère les sels alcalins ($NH_4^+$ inclus), la salification pouvant d'ailleurs s'effectuer in situ dans le milieu soumis à photopolymérisation. Parmi les adjuvants plus particulièrement utilisables on peut donc citer le sorbitol ; les acides saccharique et gluconique et leurs sels de sodium ou potassium ou ammonium ; les carboxyméthylcelluloses ; l'amidon diacide.

La quantité d'adjuvant polyhydroxylé mis en œuvre selon l'invention est généralement comprise entre 0,1 et 20 % en poids, de préférence entre 0,5 et 10 % par rapport à l'ensemble du ou des monomères mis en œuvre.

La longueur d'onde de rayonnement d'irradiation est de préférence comprise entre 300 et 450 mµ (rayonnement UV).

La solution de monomère initialement mis en œuvre contient de préférence un promoteur de photopolymérisation et, éventuellement, d'autres adjuvants de photopolymérisation.

Les monomères oléfiniquement insaturés utilisés sont à raison d'au moins 50 % en poids, de préférence au moins 80 % en poids, des monomères acryliques.

Comme monomères spécialement utilisables dans l'invention on peut citer spécialement l'acrylamide, le méthacrylamide ; les acides acrylique, méthacrylique, méthallylsulfonique, vinylbenzènesulfonique et leurs sels ou esters, notamment les sels alcalins ; la N-vinylpyrrolidone ; la méthyl-2 vinyl-5 pyridine et les acrylates et méthacrylates d'amino alcoyle, ces composés étant de préférence quaternisés et le cas échéant ayant de préférence de 4 à 16 atomes de carbone dans la partie aminoalcoyle quaternisée ; l'utilisation de ces monomères isolés ou en mélange conduit à des floculants homopolymères ou copolymères, la nature et la proportion de ces monomères étant évidemment choisies de manière à obtenir des polymères hydrosolubles ; c'est ainsi que l'acrylonitrile et le méthacrylonitrile peuvent aussi être utilisés comme monomères mais on préfère limiter leur teneur par rapport aux autres monomères à moins de 3 % en poids.

Les monomères préférées sont l'acrylamide, l'acide acrylique et ses sels alcalins et les méthacrylates de dialcoylaminoalcoyle quaternisés (forme chlorure ou sulfate).

La concentration de la solution aqueuse de monomère soumise à photopolymérisation est généralement comprise entre 30 et 90 % en poids.

Avec l'acrylamide et les acrylates la concentration est généralement comprise entre 30 et 70 %, de préférence entre 40 et 60 %.

Avec les sels d'ammonium quaternisés, notamment ceux dérivés de méthacrylates d'aminoalcoyle la concentration est généralement comprise entre 40 et 90 % en poids, de préférence entre 70 et 88 %.

Avec l'acrylamide associé aux sels quaternisés de méthacrylates d'aminoalcoyle, la concentration de la solution aqueuse de monomères est généralement comprise entre 40 et 70 % en poids de préférence entre 45 et 65 %.

Les promoteurs de photopolymérisation, également appelés photoinitiateurs, sont de type connu en soi. On peut citer notamment le diacétyle, le dibenzole, la benzophénone, la benzoïne et ses alcoyléthers, notamment ses éthers méthylique, éthylique, propylique, isopropylique. La teneur en photoinitiateur de la solution de monomères initiale soumise à photopolymérisation est généralement comprise entre 0,005 et 1 % en poids du ou des monomères, de préférence entre 0,01 et 0,5 %. On peut aussi utiliser les adjuvants de photopolymérisation antraquinoniques comme décrits dans le brevet français 2 327 258.

Le support mobile sur lequel est déposé la solution aqueuse de monomère à photopolymériser est généralement constitué par une bande sans fin ou, dans certains cas, par plusieurs bandes sans fin successives (la deuxième bande n'intervenant qu'après solidification du milieu photopolymérisé). L'épaisseur de la couche de solution aqueuse soumise à photopolymérisation est généralement comprise entre 2 et 20 mm, de préférence entre 3 et 8 mm. La support mobile est préférentiellement un support hydrofuge ; on peut citer comme matériau convenant comme support les polyperfluorooléfines (homo ou copolymères), les métaux recouverts ou non d'un film plastique hydrofuge tel que, par exemple, un film de polyester.

Dans le but d'éliminer la chaleur produite par la photopolymérisation, il est habituel de refroidir le support mobile de photopolymérisation. Ce refroidissement s'effectue commodément sur la face inférieure du support mobile de préférence par arrosage à l'eau froide. On maintient la température du milieu de polymérisation inférieure à 70 °C environ, de préférence inférieure à 60 °C. Cependant on peut s'abstenir de procéder à un refroidissement, notamment lorsqu'une partie importante des monomères est

déjà polymérisée, par exemple lorsque la teneur en monomère résiduel est inférieure à 10 %, de préférence inférieure à 2 % (en poids par rapport à la masse soumise à photopolymérisation). Le pH des solutions aqueuses de monomères soumises à photopolymérisation est en général compris entre 4 et 13. La valeur plus particulière du pH dépend de divers facteurs, notamment des monomères particuliers mis en œuvre et du poids moléculaire vers lequel on tend et aussi des impuretés propres aux monomères. Généralement en élevant le pH on tend à éviter la réticulation des plus hauts poids moléculaires (la réticulation produisant des fractions insolubles). Un intérêt des adjuvants selon l'invention est de permettre l'usage de pH moins élevé que dans les procédés connus (pour des monomères de nature et de concentration données et lorsqu'on cherche effectivement à obtenir les polymères ayant les plus hauts poids moléculaires possibles ; cela a lieu surtout avec les monomères dits anioniques c'est-à-dire à groupes échangeurs de cations, la zone pratique de pH étant abaissée depuis 12-13 jusqu'à 9-11,5).

Selon ce qui a été dit plus haut l'invention consiste à soumettre à photopolymérisation une solution aqueuse de monomères oléfiniquement insaturés dans les conditions qui ont été définies. Il est cependant bien entendu et bien évident que c'est seulement initialement que le milieu de photopolymérisation est à l'état de solution aqueuse avec la nature et les concentrations sus-définies ; par contre, au fur et à mesure de l'avancement de la photopolymérisation, le milieu de photopolymérisation devient de plus en plus visqueux jusqu'à devenir solide.

La photopolymérisation elle-même peut être effectuée en une ou plusieurs phases ; l'atmosphère surmontant le (c'est-à-dire située au dessus du) milieu de photopolymérisation est généralement et initialement débarassée d'oxygène, ce qui s'obtient commodément par un balayage de gaz inerte. Cependant on peut aussi opérer en présence d'oxygène, notamment lorsqu'on incorpore des adjuvants adéquats dans la solution à photopolymériser ou lorsque la teneur en monomère non polymérisé dans le milieu de photopolymérisation est devenue faible, par exemple inférieure à 10 %, de préférence inférieure à 5 % (en poids par rapport à la masse soumise à photopolymérisation).

On peut donc procéder à l'irradiation UV jusqu'à ce que la photopolymérisation ait fait disparaître l'essentiel des monomères.

Selon une variante avantageuse, on peut irradier en plusieurs phases. C'est ainsi que dans une première phase (1 à 20 minutes, de préférence 3 à 7 minutes), on irradie avec des UV de longueur d'onde comprise entre 300 et 450 mμ la puissance moyenne du rayonnement actif étant comprise entre 20 et 300 watt/m² et la teneur en oxygène de l'atmosphère (surmontant le milieu de photopolymérisation) étant inférieure à 5 % en volume, de préférence inférieure à 0,5 %, puis dans une deuxième phase (1 à 20 minutes, de préférence 3 à 10 minutes) on irradie avec des UV de longueur d'onde comprise également entre 300 et 2 000 watt/m² et la teneur en oxygène étant également inférieure à 5 %, de préférence inférieure à 0,5 %.

Le cas échéant ces deux phases peuvent être complétées par une troisième phase (habituellement 20 minutes à 3 h, de préférence 25 mn à 90 mn) d'irradiation de la couche non liquide (le plus souvent caoutchouteuse) obtenue, l'irradiation ayant lieu à l'air, sans refroidissement du support (alors que les deux premières phases se font avec refroidissement du support); la puissance moyenne de rayonnement actif étant comprise entre 20 et 500 watt/m².

Dans un tel procédé opérant en 3 étapes, selon l'invention on préfère humidifier l'atmosphère dans toutes les étapes aussi bien s'il s'agit d'une atmosphère non oxygénée que s'il s'agit d'air.

Les exemples suivants donnés à titre non limitatif illustrent l'invention et montrent comment elle peut être mise en œuvre.


Exemple 1

Dans un bac de dissolution on réalise une solution en ajoutant successivement sous agitation :
— 65,25 kg d'eau déminéralisée
— 47,5 kg d'acrylamide d'indice d'acide égal à 0,6 (provenant de l'hydrolyse sulfurique de l'acrylonitrile)
— 19,5 kg de solution aqueuse de soude à 50 % en poids
— 0,45 kg de gluconate de sodium.

Cette solution est alimentée en tête d'une colonne à garnissage ; dans cette même colonne, on introduit, en tête de colonne une solution diluée de soude à 30 % permettant de réguler le pH à 10,5, au milieu de colonne un débit de 137 cm³/h de solution d'éther isopropylique de la benzoïne dans l'acide acrylique, en bas de colonne un débit d'azote suffisant pour maintenir la teneur en oxygène dissous du liquide sortant en bas de colonne inférieure ou égale à 0,15 mg d'oxygène par litre de solution.

La solution aqueuse désaérée de monomère s'écoule en continu avec un débit de 31 l/h sur une bande d'acier inoxydable de 48 cm de large comportant deux bords latéraux similaires pour éviter l'écoulement latéralement. De plus la bande est très légèrement inclinée dans le sens du déroulement pour éviter l'écoulement de la solution vers l'arrière. L'atmosphère gazeuse au-dessus de la bande est délimitée par des plaques de verre et est débarassée d'oxygène par un courant d'azote humide. La bande métallique se déplace à une vitesse de 24 cm par minute environ. A cette vitesse l'épaisseur de la couche de solution de monomère est de 4,5 mm environ. La bande refroidie à sa partie inférieure par de l'eau à 15 °C est soumise sur une longueur de 3,6 m à une première phase d'irradiation ainsi constituée : sur 165

4

cm on dispose perpendiculairement au sens de déroulement de la bande et à 10 cm d'elle, 23 lampes à vapeur de mercure basse pression ayant chacune une puissance électrique de 40 watts (de marque Philips TLAK 40 w/05) ce qui correspond en UV à une puissance reçue moyenne d'environ 80 watt/m² compte tenu des différentes déperditions ; puis une deuxième phase d'irradiation, suivant la première, est ainsi constituée : sur les 195 cm restant on dispose quatre lampes à vapeur de mercure haute pression ayant chacune une puissance électrique de 2 000 watts (de marque Philips HTQ 7). Ces quatre lampes sont disposées dans le sens de déroulement de la bande ce qui correspond en UV à une puissance d'environ 400 watts/m². La durée des phases b et c de l'irradiation est d'environ 15 minutes.

On a le tableau de marche suivant :

| Longueur d'irradiation : | Température de surface : | Nature du produit : |
|---|---|---|
| 30 cm | 28°C | Produit filant |
| 60 cm | 42°C | Produit visqueux |
| 90 cm | 47°C | Produit plastique |
| 120 cm | 45°C | Produit plastique |
| 150 cm | 32°C | Produit plastique |

L'expression « produit filant » signifie que la solution a pris une viscosité suffisante pour qu'elle coule lentement comme de l'huile sans se diviser en gouttes. Par produit visqueux on entend un fluide capable de fluer mais dans lequel il ne se forme pas de bulles d'air si on l'agite violemment à la main. Par produit plastique on entend un gel ayant une consistance caoutchouteuse :

Après 15 minutes d'irradiation, on obtient un film plastique qui se détache de la bande par simple traction. On effectue alors une troisième phase d'irradiation à l'air pendant 1 heure en plaçant le film obtenu sous un rayonnement identique et de même intensité que celui utilisé sur les 165 premiers centimètres de la bande inox.

Le film est ensuite cassé en fragments à l'aide d'un hachoir, séché 30 mm à 85 °C environ puis broyé sous forme de poudre.

Cette poudre se dissout parfaitement dans l'eau à température ambiante en 16 heures de temps pour une concentration de 5 g/l en polymère et présente une viscosité intrinsèque de 19 dl/g.

## Exemple 2

On reproduit l'exemple 1 mais en utilisant un acrylamide ayant un indice d'acide de 0,04 (au lieu de 0,6).

On obtient après broyage une poudre qui se dissout dans l'eau en 3 h de temps (concentration 5 g/l) et qui a une viscosité intrinsèque de 19 dl/g.

## Exemple 3

Dans un bac de dissolution on réalise une solution à partir des constituants suivants :
— 78 kg d'eau déminéralisée
— 72 kg d'acrylamide d'indice d'acide égal à 0,6 (acrylamide provenant de l'hydrolyse sulfurique de l'acrylonitrile).
— 1,8 kg de gluconate de sodium.

On procède à photopolymérisation comme à l'exemple 1 sauf que la solution d'éther isopropylique de la benzoïne est introduite avec un débit de 91 cm³/h (au lieu de 137) et que le pH est régulé à 10 (au lieu de 10,5).

On obtient après broyage une poudre qui se dissout totalement en 24 h (concentration 5 g/l) et présente une viscosité intrinsèque de 15 dl/g.

## Exemple 4

On reproduit l'exemple 3 mais avec les modifications suivantes :
— l'acrylamide a un indice d'acide de 0,04 (au lieu de 0,6) ;
— on utilise seulement 1,1 kg de gluconate (au lieu de 1,8 kg) ;
— le débit de la solution d'éther isopropylique de la benzoïne est de 135 cm³/h (au lieu de 91) ;
— le pH est régulé à 9 (au lieu de 10).

On obtient après broyage une poudre qui se dissout totalement dans l'eau en 4 h de temps (concentration 5 g/l) ; sa viscosité intrinsèque est de 15 dl/g.

**0 006 370**

## Exemple 5

Dans un bac de dissolution on prépare une solution à base des constituants suivants :
— 65,25 kg d'eau déminéralisée
— 47,5 kg d'acrylamide (indice d'acide : 0,2 ; cet acrylamide provient de l'hydrolyse acide de l'acrylonitrile).
— 17,55 kg d'acide acrylique impur (244 ppm d'éther monométhylique d'hydroquinone ; 3 % de dimère ; 25 ppm d'acroléine ; 9,2 ppm de furfural ; 15 ppm d'acétaldéhyde ; 0,1 % d'acide formique ; 0,6 % d'acide acétique ; 0,5 % d'acide propionique ; composés soufrés dont la teneur exprimée en soufre est de 2,2 ppm).
— 19,5 kg de solution aqueuse de soude à 50 %
— 0,45 kg de gluconate de sodium.
On utilise le procédé de photopolymérisation décrit à l'exemple 1.
On obtient une poudre totalement hydrosoluble (concentration : 5 g/l) en 48 h de temps et ayant une viscosité intrinsèque de 18,5 dl/g.

## Exemple 6

Dans un bac de dissolution on prépare une solution à partir des constituants suivants :
— 65,7 kg d'eau déminéralisée
— 72,5 kg d'acrylamide d'indice d'acide égal à 0,2
— 9,9 kg de chlorure de méthacrylate d'éthyltriméthylammonium commercial (concentration en produit pur : 85 %, le complément à 100 % étant essentiellement de l'eau ; ce produit commercial est purifié avant usage selon le procédé décrit dans le brevet anglais 1 459 811)
— 1,9 kg de gluconate de sodium.
On procède à la photopolymérisation selon le procédé décrit à l'exemple 1 mais avec les modifications suivantes :
— l'éther isopropylique de la benzoïne est dissous à 34 g/l dans du méthanol et cette solution est introduite dans le mélange à polymériser à raison de 103 cm³/h.
— le pH est régulé à 8 à l'aide d'une solution d'ammoniaque à 10 % en poids de $NH_4OH$.
— après 15 mn de photopolymérisation comme à l'exemple 1 la pellicule obtenue est hachée puis séchée à 45 mn à 75 °C puis broyée.
La poudre obtenue se dissout en 1 h 45 mn dans l'eau à température ambiante (concentration : 5 g/l). La viscosité intrinsèque du polymère est d'environ 10 dl/g, la teneur en monomère résiduel est de 0,15 %.

## Revendications

1. Procédé de préparation de polymères hydrosolubles par irradiation à l'aide de rayonnements de longueur d'onde comprise entre 150 et 500 mµ (de préférence comprise entre 300 et 450 mµ) d'une couche mince déposée en continu sur un support mobile, d'une solution aqueuse de monomères oléfiniquement insaturés contenant un promoteur de photopolymérisation, caractérisé en ce que la solution aqueuse de monomères contient aussi un composé polyhydroxylé comprenant au moins deux fonctions alcool secondaire et possédant en plus 1 ou 2 groupes carboxyliques (sous forme acide ou sous forme sel).

2. Procédé selon la revendication 1, caractérisé en ce que le composé polyhydroxylé à 1 ou 2 groupes carboxyliques est un dérivé des oses, ayant de préférence de 5 à 6 atomes de carbone.

3. Procédé selon la revendication 1, caractérisé en ce que le composé polyhydroxylé est choisi dans le groupe comprenant l'acide saccharique et ses sels de sodium ou de potassium, les carboxuméthyl celluloses, l'amidon diacide et, de préférence, l'acide gluconique et ses sels de sodium ou de potassium ou ammonium.

4. Procédé selon l'une des revendications 1 à 3, caractérisé en ce que la quantité d'adjuvant polyhydroxylé à un ou deux groupes carboxyliques mis en œuvre par rapport à l'ensemble du ou des monomères mis en œuvre est comprise entre 0,1 et 20 %, de préférence entre 0,5 et 10 %.

5. Procédé selon l'une des revendications 1 à 4 caractérisé en ce que la solution aqueuse initialement soumise à photopolymérisation a une concentration en monomère comprise entre 30 et 90 % en poids et que les monomères sont choisis dans le groupe comprenant l'acrylamide, le methacrylamide ; les acides acrylique, méthacrylique, metallylsulfonique, vinylbenzènesulfonique et leurs sels ou esters ; la N-vinylpyrrolidone, la méthyl-2 vinyl-5 pyridine, et les acrylates et methacrylates d'aminalcoyle sous forme quaternisée.

6. Procédé selon la revendication 5, caractérisé en ce que les monomères sont choisis dans le groupe constitué par l'acrylamide, l'acide acrylique et ses sels alcalins, les méthacrylates d'aminoalcoyle quaternisés ayant de 4 à 16 atomes de carbone dans la partie aminoalcoyle quaternisée.

7. Procédé selon l'une des revendications 1 à 6, caractérisé en ce que l'épaisseur de la couche mince de solution aqueuse de monomère a une épaisseur comprise entre 2 et 20 mm, de préférence comprise entre 3 et 8 mm, et que la teneur en photoinitiateur de cette solution est comprise entre 0,005 et 1 % en poids par rapport au (x) monomères(s), de préférence entre 0,01 et 0,5 %, et que le support mobile est refroidi et que le pH est compris entre 4 et 13.

8. Procédé selon l'une des revendications 1 à 7, caractérisé en ce qu'on irradie en deux phases, la première avec des longueurs d'onde comprise entre 300 et 450 mμ, avec une puissance moyenne de rayonnement actif compris entre 20 et 300 watt/m² la durée de cette première phase étant de préférence comprise entre 1 et 20 minutes, la deuxième phase d'irradiation ayant lieu avec des longueurs d'onde comprises entre 300 et 2 000 watts/m².

9. Procédé selon la revendication 8, caractérisé en ce que la teneur en oxygène de l'atmosphère est inférieure à 0,5 % et que les deux premières phases d'irradiation sont complétées par une troisième phase ayant lieu à l'air, sans refroidissement du support avec une puissance moyenne de rayonnement comprise entre 20 et 500 watts/m² pendant une durée supérieure à 20 minutes.

10. Utilisation des polymères obtenus selon l'une des revendications 1 à 9 comme floculants.

## Claims

1. Process for the preparation of water-soluble polymers by irradiation by means of radiation having a wavelength of between 150 and 500 mμ (and preferably of between 300 and 450 mμ) of a thin layer, deposited in a continuous fashion on a moving support, of an aqueous solution of olefinically unsaturated monomers, containing a photopolymerisation promoter, characterised in that the aqueous solution of monomers also contains a polyhydroxylated compound comprising at least two secondary alcohol functional groups and comprising, furthermore, 1 or 2 carboxyl groups (in the acid or salt form).

2. Process according to Claim 1, characterised in that the polyhydroxylated compound with 1 or 2 carboxyl groups is a derivative of an ose, having preferably 5 to 6 carbon atoms.

3. Process according to Claim 1, characterised in that the polyhydroxylated compound is selected from the group comprising saccharic acid and its sodium or potassium salts, the carboxymethylcelluloses, diacidic starch and, preferably, gluconic acid and its sodium, potassium or ammonium salts.

4. Process according to one of Claims 1 to 3, characterised in that the quantity of polyhydroxylated adjuvant, containing one or two hydroxyl groups, which is used represents between 0.1 and 20 %, and preferably between 0.5 and 10 %, of the total amount of monomer or monomers used.

5. Process according to one of Claims 1 to 4, characterised in that the aqueous solution initially subjected to photopolymerisation has a monomer concentration of between 30 % and 90 % by weight and that the monomers are chosen from the group which comprises acrylamide, methacrylamide ; acrylic acid, methacrylic acid, methallylsulphonic acid, vinylbenzenesulphonic acid and their salts or esters ; N-vinylpyrrolidone, 2-methyl-5-vinylpyridine, and the aminoalkyl acrylates and methacrylates in quaternised form.

6. Process according to Claim 5, characterised in that the monomers are chosen from the group formed by acrylamide, acrylic acid and its alkali metal salts, and the quaternised aminoalkyl methacrylates which have from 4 to 16 carbon atoms in the quaternised aminoalkyl part.

7. Process according to one of Claims 1 to 6, characterised in that the thickness of the thin layer of aqueous solution of monomer is between 2 and 20 mm, preferably between 3 and 8 mμ, and that the photoinitiator content of this solution is between 0.005 and 1 % by weight, relative to the monomer or monomers, preferably between 0.01 and 0.5 %, and in that the moving support is cooled, and in that the pH is between 4 and 13.

8. Process according to one of Claims 1 to 7, characterised in that an irradiation is carried out, in two stages, the first one with wavelengths of between 300 and 450 mμ, with an average power of active radiation of between 20 and 300 watts/m², the duration of this first stage being preferably between 1 and 20 minutes, the second stage of irradiation taking place with wavelengths of between 300 and 450 mμ, with an average power of active radiation of between 300 and 2 000 watts/m².

9. Process according to Claim 8, characterised in that the oxygen content of the atmosphere is lower than 0.5 % and that, after the first two stages of irradiation, the process is completed by a third stage, taking place in air, without cooling the support, with an average radiation power of between 20 and 500 watts/m² for a length of time greater than 20 minutes.

10. Use of the polymers obtained according to one of Claims 1 to 9 as flocculating agents.

## Ansprüche

1. Verfahren zur Herstellung von wasserlöslichen Polymeren durch Bestrahlung mittels Strahlungen einer Wellenlänge zwischen 150 und 500 mμ (vorzugsweise zwischen 300 und 450 mμ) einer dünnen, kontinuierlich auf einem beweglichen Träger abgelagerten Schicht einer wäßrigen Lösung von olefinisch ungesättigten Monomeren, enthaltend einen Photopolymerisations-Promotor, dadurch gekennzeichnet, daß die wäßrige Lösung der Monomeren auch eine Polyhydroxylverbindung, umfassend mindestens zwei sekundäre Alkoholfunktionen, die außerdem 1 oder 2 carboxylgruppen (in Säureform oder in Salzform) aufweist, enthält.

2. Verfahren gemäß Anspruch 1, dadurch gekennzeichnet, daß die Polyhydroxylverbindung mit 1 oder 2 Carboxylgruppen ein Derivat der Osen mit vorzugsweise 5 bis 6 Kohlenstoffatomen ist.

3. Verfahren nach Anspruch 1, dadurch gekennzeichnet, daß die Polyhydroxylverbindung ausgewählt ist aus der Gruppe umfassend die Zuckersäure und ihre Natrium- oder Kaliumsalze, die Carboxymethylcellulosen, die Stärkedisäure und vorzugsweise die Gluconsäure und ihre Natrium- oder Kalium- oder Ammoniumsalze.

4. Verfahren nach einem der Ansprüche 1 bis 3, dadurch gekennzeichnet, daß die Menge an eingesetztem Polyhydroxyl-Hilfsmittel mit 1 oder 2 Carboxylgruppen im Bezug auf die Gesamtheit des oder der eingesetzten Monomeren zwischen 0,1 und 20 %, vorzugsweise zwischen 0,5 und 10 % beträgt.

5. Verfahren nach einem der Ansprüche 1 bis 4, dadurch gekennzeichnet, daß die wäßrige Lösung, die anfänglich der Photopolymerisation unterworfen wird, eine Monomerenkonzentration zwischen 30 und 90 Gewichts-% aufweist und daß die Monomeren ausgewählt sind aus der Gruppe umfassend das Acrylamid, das Methacrylamid ; die Acryl-, Methacryl-, Methallylsulfon-, Vinylbenzolsulfonsäuren und ihre Salze oder Ester ; das N-Vinylpyrrolidon, das 2-Methyl-5-Vinyl-pyridin und die Aminoalkylacrylate und -methacrylate in quaternisierter Form.

6. Verfahren gemäß Anspruch 5, dadurch gekennzeichnet, daß die Monomeren ausgewählt sind aus der Gruppe bestehend aus Acrylamid, Acrylsäure und ihren Alkalisalzen, den quaternisierten Aminoalkylmethacrylaten mit 4 bis 16 Kohlenstoffatomen im quaternisierten Aminoalkylteil.

7. Verfahren gemäß einem der Ansprüche 1 bis 6, dadurch gekennzeichnet, daß die Dicke der dünnen Schicht der wäßrigen Monomerenlösung zwischen 2 und 20 mm, vorzugsweise zwischen 3 und 8 mm beträgt und daß der Gehalt an Photoinitiator dieser Lösung zwischen 0,005 und 1 Gewichts-% im Bezug auf das oder die Monomeren, vorzugsweise zwischen 0,01 und 0,5 %, aufweist und daß der bewegliche Träger gekühlt wird und daß der pH-Wert zwischen 4 und 13 beträgt.

8. Verfahren gemäß einem der Ansprüche 1 bis 7, dadurch gekennzeichnet, daß man in zwei Phasen bestrahlt, die erste mit Wellenlängen zwischen 300 und 450 m$\mu$, mit einer mittleren Stärke an aktiver Strahlung zwischen 20 und 300 Watt/m$^2$, wobei die Dauer dieser ersten Phase vorzugsweise zwischen 1 und 20 Minuten beträgt und wobei die zweite Bestrahlungsphase mit Wellenlängen zwischen 300 und 450 m$\mu$ mit einer mittleren Stärke an aktiver Strahlung zwischen 300 und 2 000 Watt/m$^2$ stattfindet.

9. Verfahren gemäß Anspruch 8, dadurch gekennzeichnet, daß der Gehalt an Sauerstoff der Atmosphäre unter 0,5 % beträgt und daß die beiden ersten Bestrahlungsphasen ergänzt werden durch eine dritte Phase, die an der Luft ohne Kühlung des Trägers stattfindet, mit einer mittleren Strahlungsstärke zwischen 20 und 500 Watt/m$^2$ während einer Dauer von größer als 20 Minuten.

10. Verwendung der gemäß einem der Ansprüche 1 bis 9 erhaltenen Polymeren als Flockungsmittel.